# FASCICULE DE BREVET EUROPEEN

(11) **EP 0 362 018 B1**
(45) Date de publication et mention de la délivrance du brevet: **04.08.1993**
(21) Numéro de dépôt: 89402542.8
(22) Date de dépôt: 15.09.1989
(51) Int. Cl.: E05F 11/44, B60J 1/17

(54) **Dispositif de liaison entre une vitre et un bras de lève-vitre dans une porte de véhicule**
Verbindungsvorrichtung zwischen einem Fenster und einem Hebelarm in einer Fahrzeugtür
Connecting device between a window and a lever arm in a door of a vehicle

(30) Priorité: 26.09.1988 FR 8812541
(43) Date de publication de la demande: 04.04.1990
(73) Titulaire: ROCKWELL AUTOMOTIVE BODY SYSTEMS-FRANCE EN ABREGE:ROCKWELL ABS-FRANCE, 92082 Paris La Defense 2 (FR)
(72) Inventeur: Bertolini, Carlo, F-75011 Paris (FR)
(74) Mandataire: Martin, Jean-Paul

(56) Documents cités:
- DE-A- 2 423 737
- FR-A- 2 043 085
- US-A- 3 282 013

## Description

La présente invention a pour objet un dispositif de liaison entre une vitre et un bras de lève-vitre dans une porte de véhicule automobile, du type comprenant un profilé solidaire du bord inférieur de la vitre et présentant un chemin de roulement ou de glissement adapté pour recevoir au moins un galet terminal du bras.

On sait que certains mécanismes de lève-vitre des portes de véhicule automobile comprennent au moins un bras articulé sur le profilé solidaire du bord de la vitre par l'intermédiaire de galets, et plus précisément sur un profilé fixé à un autre profilé présentant une gorge qui reçoit le bord inférieur de la vitre.

Ainsi le document FR-A-2 043 085 décrit un dispositif de liaison entre une vitre 11 et un bras de lève-vitre de porte 34 dans un véhicule, comprenant au moins un profilé 32 solidaire du bord inférieur de la vitre 11 et présentant un chemin de roulement ou de glissement adapté pour recevoir au moins un galet terminal du bras 34.

Jusqu'à présent l'assemblage de la vitre et des bras du lève-vitre sur les chaînes de montage de véhicules s'est effectué manuellement. Or, dans le cadre de l'automatisation progressive des chaînes de montage, on constate que la complexité des mouvements requis pour réaliser cet assemblage, partiellement fait "en aveugle" par l'opérateur, est trop grande pour que ceux-ci puissent être exécutés par un robot manipulateur de la vitre.

L'invention a donc pour but de proposer un dispositif de liaison entre la vitre et le bras de lève-vitre qui soit agencé de manière à permettre l'assemblage par un robot.

Suivant l'invention, le dispositif de liaison entre une vitre et un bas de vitre de porte dans un véhicule est caractérisé par la partie caractérisante de la revendication 1.

Selon un mode de réalisation de l'invention, ledit profilé est à section sensiblement en C, l'ouverture est ménagée dans une branche de ce profilé formant le chemin de roulement ou de glissement du galet, et lesdits moyens de fermeture comprennent une glissière logée dans le profilé, munie d'éléments de verrouillage et d'entraînement en translation par le galet jusqu'à une position dans laquelle elle recouvre l'ouverture du profilé.

Un profilé est ainsi associé à chaque bras du lève-vitre, et ceux-ci sont préalablement mis dans une position intermédiaire entre la position où ils sont parallèles audit profilé et l'une de leurs positions extrêmes, de préférence la position haute avec leurs galets placés sous les ouvertures des profilés.

Dans ces conditions, pour exécuter l'assemblage entre la vitre et le lève-vitre, il suffit au robot de commander l'introduction des galets dans les ouvertures correspondantes du profilé par translation verticale vers le bas de la vitre. Le robot fait fonctionner le lève-vitre vers le haut de façon que le galet se déplace dans le profilé en s'encliquetant sur la glissière. Une seconde manoeuvre vers le bas du lève-vitre provoque un déplacement dans le sens opposé dans le profilé, qui a pour effet d'entraîner la glissière, qui ferme l'ouverture du profilé.

D'autres particularités et avantages de l'invention apparaîtront au cours de la description qui va suivre, faite en référence aux dessins annexés qui en illustrent deux formes de réalisation à titre d'exemples non limitatifs.

La figure 1 est une vue en perspective schématique d'un lève-vitre de porte de véhicule automobile et d'un dispositif de liaison de ses bras à la vitre conforme à l'invention.

La figure 2 est une vue en perspective d'une première forme de réalisation du dispositif de liaison selon l'invention.

La figure 3 est une vue en coupe transversale du dispositif de liaison de la Fig.2.

La figure 4 est une vue en coupe longitudinale suivant 4/4 de la Fig.3.

Les figures 5, 6 et 7 sont des vues analogues à la Fig.4 illustrant avec celle-ci une séquence de mise en place par un robot du galet d'un bras de lève-vitre dans le profilé de liaison avec la vitre.

La figure 8 est une vue en perspective analogue à la Fig.2 d'une variante de réalisation de l'invention.

La figure 9 est une vue en perspective du dispositif de liaison des Fig.2 à 7 après montage.

Les figures 10, 11, 12 et 13 sont des vues en perspective analogues à la Fig.1 et illustrant une séquence de montage du dispositif de liaison selon l'invention, en correspondance avec les Fig.4 à 7.

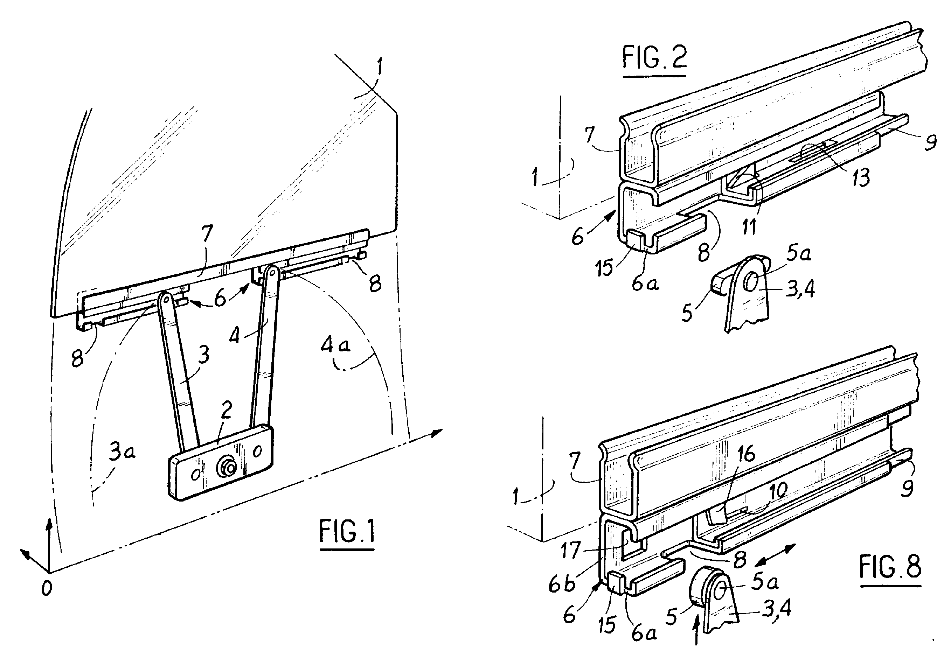

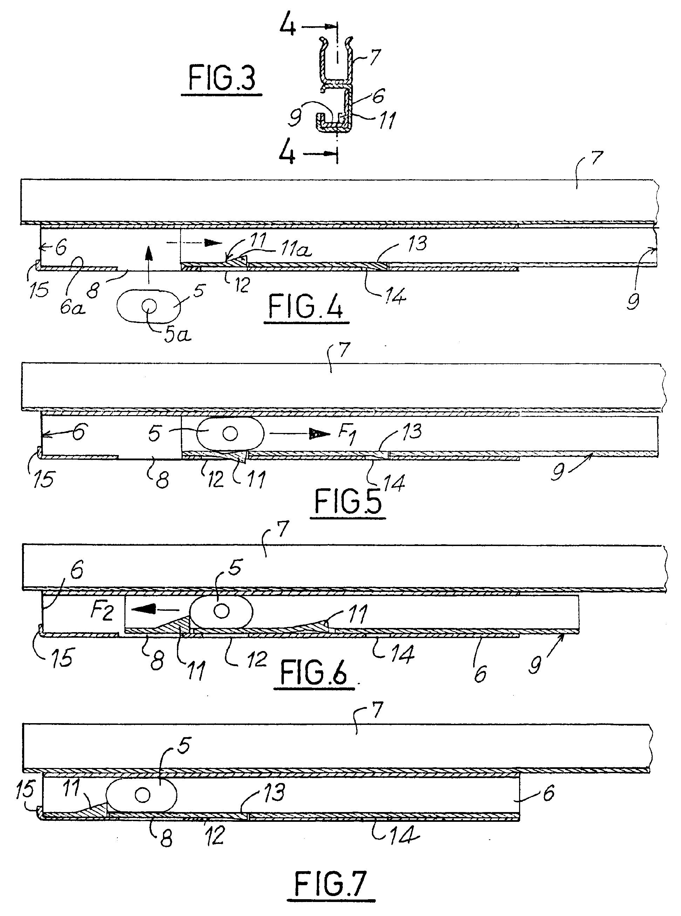

On voit à la Fig.1 une vitre 1 d'une porte non représentée d'un véhicule automobile, ainsi qu'un mécanisme de lève-vitre 2, connu en soi, comportant deux bras oscillants 3,4 dont les extrémités portent chacune un galet 5 de roulement ou de glissement (Fig.2) dans un profilé 6 fixé à un second profilé 7 en U qui reçoit le bas de la vitre 1.

Au cours des montées et descentes de la vitre 1 après son assemblage avec les bras 3 et 4, les extrémités de ces derniers parcourent des trajets incurvés 3a, 4a représentés en traits mixtes à la Fig.1.

Le profilé 6 est à section sensiblement en C, ouvert afin de permettre le passage de l'axe 5a du galet 5 et de l'extrémité du bras correspondant 3 ou 4, la branche inférieure 6a du C délimitant le chemin de roulement ou de glissement du galet 5.

Une ouverture 8 d'introduction du galet 5 est ménagée dans le profilé 6, et plus précisément dans sa branche inférieure 6a. De plus, le profilé 6 est équipé de moyens de fermeture automatique de l'ouverture 8 par introduction et positionnement du galet 5 en translation dans le profilé 6 à l'endroit voulu.

Dans le mode de réalisation représenté, ces moyens comprennent une glissière 9 logée dans le profilé 6, ayant par exemple une section sensiblement en L (Fig.3) épousant celle du profilé, et qui peut glisser en translation à l'intérieur de ce dernier. La glissière 9 est munie d'éléments de verrouillage et d'entraînement en translation par le galet 5 : dans l'exemple décrit ces éléments comportent un cliquet antiretour 11 formé par une languette élastique venue de matière avec la glissière 9, dont une extrémité est au repos dans une position saillante au-dessus de la surface de la glissière 9 (Fig. 2 et 4). Le cliquet 11 peut être escamoté élastiquement dans une première lumière 12 du profilé 6 sous la pression du galet 5 lorsque ce dernier se déplace de gauche à droite en considérant les Fig.4 à 7. A cet effet, l'extrémité du cliquet 11 présente une surface 11a inclinée vers la lumière 12 afin que le déplacement du galet 5 sur cette surface inclinée efface le cliquet 11 dans la lumière 12.

La glissière 9 est pourvue d'un second cliquet 13 adapté pour s'encliqueter élastiquement, dans sa position de montage (Fig.4), dans une seconde lumière correspondante 14 du profilé 6, en verrouillant ainsi la glissière 9 sur le profilé 6 lorsque la glissière 9 est dans une position où elle découvre l'ouverture 8 (Fig.4). Ce second cliquet 13 est en butée sur le profilé 6 de façon à immobiliser la glissière 9 lors du déplacement horizontal de la gauche vers la droite du galet 5 (Fig.5). De plus ce second cliquet 13 est apte à venir dans sa position normale dans la lumière 12, lors du déplacement horizontal de la droite vers la gauche (Fig.7) du galet 5, immobilisant la glissière 9 en position normale.

Enfin, le profilé 6 est muni d'une butée terminale 15 d'arrêt de la glissière 9 lorsque celle-ci est en fin de course d'entraînement par le galet 5 et ferme l'ouverture 8 (Fig.7). La butée 15 peut être réalisée par tout moyen approprié, par exemple par un pliage de l'extrémité de la tôle constituant le profilé 6. Sous le profilé 7 sont fixés, par exemple par soudure, deux profilés 6 séparés par un intervalle central (Fig.1) au voisinage duquel les ouvertures 8 sont ménagées.

La séquence d'assemblage des bras 3 et 4 du lève-vitre et de l'ensemble constitué par la vitre 1 et les profilés 6, 7 est exécutée de la manière suivante par un robot (non représenté) portant la vitre 1 au moyen par exemple de ventouses.

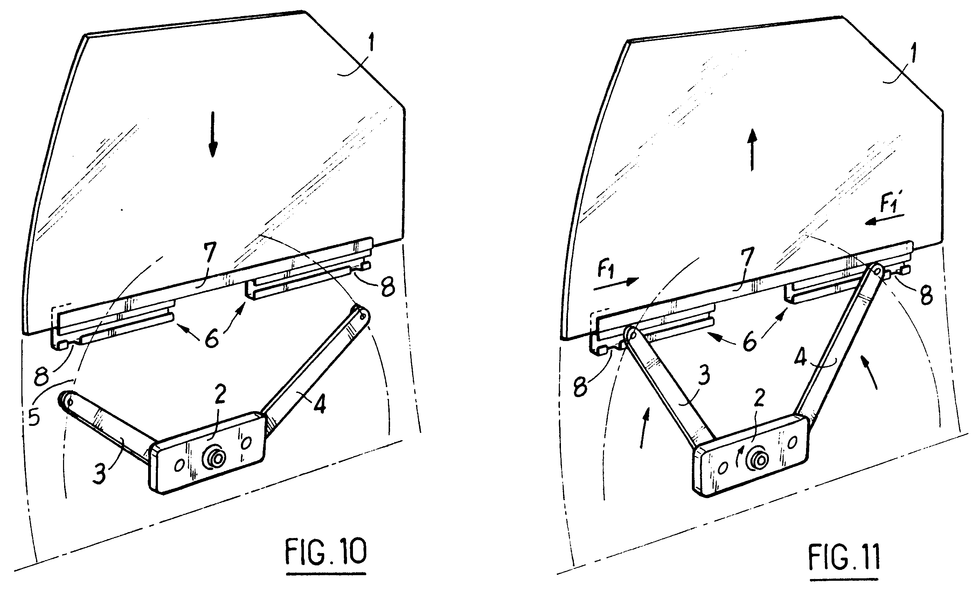

Figures 4 et 10 : les bras 3,4 sont dans leur position de montage, intermédiaire entre leur position horizontale et leur position extrême haute, avec leurs galets 5 placés sous les ouvertures 8. Le robot fait exécuter à la vitre 1 et aux profilés 6,7 une translation verticale de haut en bas qui fait entrer les galets 5 dans les ouvertures 8.

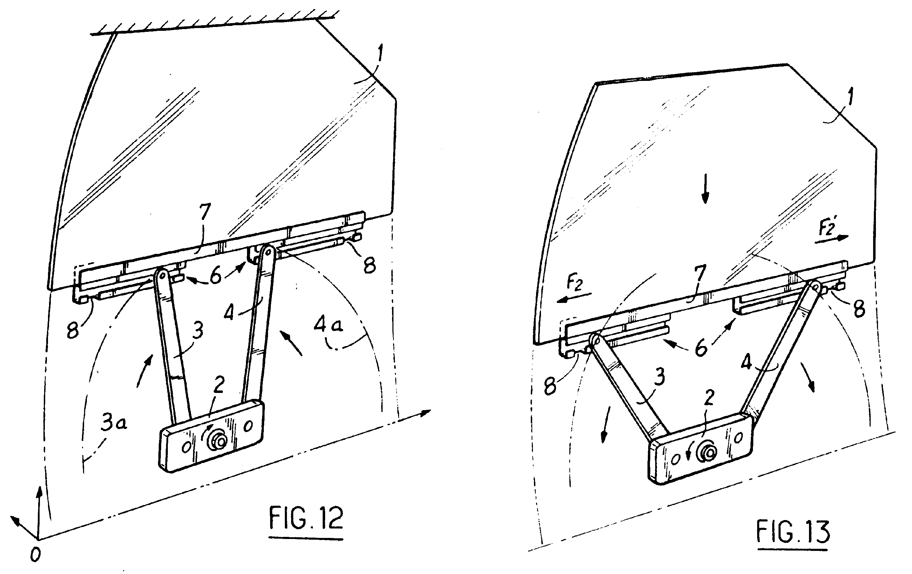

Figures 5 et 11 : Le robot fait fonctionner le lève-vitre vers le haut. Ce fonctionnement est effectué soit par actionnement d'un mécanisme manuel (non représenté) soit par mise sous tension d'un moteur électrique (non représenté). Il s'ensuit que les galets 5 exécutent une translation horizontale dans les profilés 6 sur les cliquets 11 (Flèches F1 et F'1). Les cliquets 11 s'effacent dans les lumières 12 puis reviennent élastiquement dans leur position initiale saillante. Pendant cette opération, les glissières 9 sont maintenues en position par les cliquets 13 en butée dans les lumières 14 des profilés 6.

Figures 6 et 13 : Le robot fait exécuter au lève-vitre une manoeuvre vers le bas, ce qui provoque le coulissement des galets 5 dans le sens inverse du précédent (Flèches F2 et F'2). Du fait de l'appui sur les extrémités saillantes des galets 5, ceux-ci entraînent en translation les glissières 9 qui ferment ainsi les ouvertures 8, tandis que les cliquets 13 sortent des lumières 14.

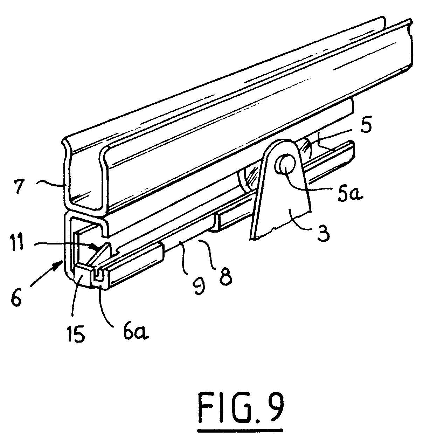

Figure 7 : Au voisinage de la position horizontale des bras 3,4, qui correspond aux fins de course horizontale des galets 5, les glissières 9 entraînées par les galets 5 sont arrêtées par les butées 15, tandis que les cliquets 13 s'effacent élastiquement dans les ouvertures 12. Les glissières 9 sont alors verrouillées en place dans les profilés 6 par les cliquets 13 qui retombent dans les lumières 12, et la vitre 1 peut être actionnée par le lève-glace 2.On voit à la Fig.9 le dispositif en position d'utilisation.

Dans la variante de réalisation de la Fig. 8, le cliquet 11 est remplacé par un cliquet 16 placé sur le côté vertical 6b du profilé 6, et coopère avec des lumières 10,17 ménagées dans ce même côté du profilé 6. Ces lumières assurent le blocage de la glissière 9 sur le profilé dans ses deux positions possibles (Fig.5 et 7). Comme le cliquet 11, le cliquet 16 présente une pente inclinée vers l'ouverture 8 pour permettre le déplacement du galet 5. Par ailleurs, le fonctionnement de cette seconde forme de réalisation est identique à celui de la réalisation précédente.

L'invention est applicable aux lève-vitres de véhicules comprenant un seul bras articulé de support de la vitre, dont le galet se déplace alors dans un seul profilé associé 6.

Lors de la manoeuvre de mise en place, on peut amener la vitre 1 en position de butée haute, telle que visible à la Fig. 12, pour régler l'assiette de la vitre en fonction de ses butées en position complètement fermée, par réglage et serrage en position des moyens de fixation du lève-vitre 2.

## Revendications

1. Dispositif de liaison entre une vitre et un bras (3,4) de lève-vitre de porte dans un véhicule, comprenant au moins un profilé (6) solidaire du bord inférieur de la vitre et présentant un chemin de roulement ou de glissement adapté pour recevoir au moins un galet terminal (5) du bras, caractérisé en ce qu'une ouverture (8) d'introduction du galet (5) est ménagée dans une branche inférieure (6a) du profilé (6), et ce dernier est équipé de moyens de fermeture automatique de l'ouverture (8) lors de l'introduction et du positionnement du galet (5) en translation dans le profilé (6) à l'endroit voulu.

2. Dispositif selon la revendication 1, caractérisé en ce que ledit profilé (6) est à section sensiblement en C, l'ouverture (8) est ménagée dans une branche (6a) de ce profilé formant le chemin de roulement ou de glissement du galet (5), et lesdits moyens de fermeture comprennent une glissière (9) logée dans le profilé, munie d'éléments de verrouillage et d'entraînement en translation par le galet jusqu'à une position dans laquelle elle recouvre l'ouverture (8) du profilé (6).

3. Dispositif selon la revendication 2, caractérisé en ce que lesdits éléments comportent un cliquet d'entraînement (11) solidaire de la glissière, réalisé de manière à être escamoté élastiquement dans une première lumière (12) du profilé (6) par une première translation du galet (5) puis à se relever automatiquement après passage du galet dans une position saillante par rapport à la glissière (9), de telle sorte qu'une seconde translation du galet dans le sens opposé à la première translation entraîne la glissière (9) au-dessus de l'ouverture (8) du profilé (6).

4. Dispositif selon la revendication 3, caractérisé en ce que la glissière (9) est pourvue d'un second cliquet (13) adapté pour s'encliqueter élastiquement, soit en position de montage dans une seconde lumière correspondante (14) du profilé (6), soit en position normale dans ladite première lumière (12), afin de verrouiller la glissière (9) sur le profilé dans l'une de ces deux positions.

5. Dispositif selon l'une des revendications 3 et 4, caractérisé en ce que le cliquet antiretour est ménagé soit (11) dans le chemin de roulement (6a) du galet (5), soit (16) dans un côté (6b) de la glissière (9) et coopère alors avec des lumières complémentaires (10, 17) du côté associé du profilé (6).

6. Dispositif selon l'une des revendications 1 à 5, caractérisé en ce que le profilé (6) est pourvu d'une butée terminale (15) d'arrêt de la glissière (9) lorsque celle-ci est en fin de course d'entraînement par le galet (5) et ferme l'ouverture (8) du profilé.

## Patentansprüche

1. Verbindungsvorrichtung zwischen einer Fensterscheibe und einem Fensterkurbelarm (3, 4) einer Fahrzeugtür, die wenigstens ein mit dem unteren Rand der Fensterscheibe fest verbundenes Profilteil (6) umfaßt, das eine Roll- oder Gleitbahn aufweist, die wenigstens eine am Ende des Arms vorgesehene Rolle (5) aufnehmen kann, dadurch gekennzeichnet, daß eine Öffnung (8) zur Einführung der Rolle (5) in einem unteren Schenkel (6a) des Profilteils (6) vorgesehen ist und dieses mit Mitteln zum automatischen Schließen der Öffnung (8) bei der Einführung und der Positionierung der Rolle (5) bezüglich geradliniger Bewegung im Profilteil (6) an der gewünschten Stelle ausgerüstet ist.

2. Vorrichtung nach Anspruch 1, dadurch gekennzeichnet, daß das Profilteil (6) einen im wesentlichen C-förmigen Querschnitt hat, die Öffnung (8) in einem die Roll- oder Gleitbahn der Rolle (5) bildenden Schenkel (6a) des Profilteils vorgesehen ist und die Mittel zum Verschließen einen in das Profilteil eingesetzten Schieber (9) umfassen, der mit Elementen zur Verriegelung und zur Mitnahme in geradliniger Bewegung durch die Rolle bis in eine Stellung, in der er die Öffnung (8) des Profilteils (6) abdeckt, ausgerüstet ist.

3. Vorrichtung nach Anspruch 2, dadurch gekennzeichnet, daß diese Elemente eine mit dem Schieber fest verbundene Mitnahmeklinke (11) umfassen, die so ausgebildet ist, daß sie durch eine erste geradlinige Bewegung der Rolle (5) elastisch in einen ersten Schlitz (12) des Profilteils (6) weggerückt wird und sich anschließend nach Durchgang der Rolle wieder automatisch in die über den Schieber (9) hinausragende Stellung nach oben bewegt, so daß eine zweite geradlinige Bewegung der Rolle in der zur ersten Bewegung entgegengesetzten Richtung den Schieber (9) über die Öffnung (8) des Profilteils (6) mitnimmt

4. Vorrichtung nach Anspruch 3, dadurch gekennzeichnet, daß die Gleitführung (9) mit einer zweiten Klinke (13) ausgerüstet ist, die entweder in der Montagestellung in einen zweiten entsprechenden Schlitz (14) des Profilteils (6) oder in der Normalstellung in den ersten Schlitz (12) einrasten kann, so daß der Schieber (9) an dem Profilteil in einer dieser beiden Stellungen verriegelt wird.

5. Vorrichtung nach einem der Ansprüche 3 und 4, dadurch gekennzeichnet, daß die Rücklaufsperrklinke entweder (11) in der Rollbahn (6a) der Rolle (5) oder (16) in einer Seite (6b) des Schiebers (9) angeordnet ist und hierbei mit ergänzenden Aussparungen (10, 17) auf der zugeordneten Seite des Profilteils (6) zusammenwirkt.

6. Vorrichtung nach einem der Ansprüche 1 bis 5, dadurch gekennzeichnet, daß das Profilteil (6) an seinem Ende mit einem Anschlag (15) zum Anhalten des Schiebers (9) versehen ist, wenn dieser sich am Ende des Wegs der Mitnahme durch die Rolle (5) befindet und die Öffnung (8) des Profilteils verschließt.

## Claims

1. Connecting device between a window and a window-raiser arm (3, 4) of a door in a vehicle, comprising at least one section (6) fixed to the lower edge of the window and having a rolling or sliding track designed for receiving at least one end roller (5) of the arm, characterised in that an orifice (8) for the introduction of the roller (5) is formed in a lower branch (6a) of the section (6), and the latter is equipped with means for the automatic closing of the orifice (8) during the introduction and positioning of the roller (5) in translational movement in the section (6) at the desired location.

2. Device according to Claim 1, characterised in that the said section (6) is of substantially C-shaped cross-section, the orifice (8) is formed in one branch (6a) of this section constituting the rolling or sliding track of the roller (5), and the said closing means comprise a slideway (9) seated in the section and equipped with elements for locking and for being driven in translational movement by the roller as far as a position in which it covers the orifice (8) in the section (6).

3. Device according to Claim 2, characterised in that the said elements comprise a driving pawl (11) which is integral with the slideway and which is produced so as to be retracted elastically into a first slot (12) of the section (6) as a result of a first translational movement of the roller (5) and then, after the passage of the roller, to rise again automatically into a position projecting relative to the slideway (9), in such a way that a second translational movement of the roller in the opposite direction to the first translational movement drives the slideway (9) over the orifice (8) in the section (6).

4. Device according to Claim 1, characterised in that the slideway (9) is equipped with a second pawl (13) designed to snap elastically either, in the assembly position, into a second corresponding slot (14) of the section (6) or, in the normal position, into the said first slot (12), in order to lock the slideway (9) on the section in one of these two positions.

5. Device according to one of Claims 3 and 4, characterised in that the non-return pawl is formed either (11) in the rolling track (6a) of the roller (5) or (16) in one side (6b) of the slideway (9), in the latter case interacting with complementary slots (10, 17) of the associated side of the section (6).

6. Device according to one of Claims 1 to 5, characterised in that the section (6) is equipped with an end abutment (15) for stopping the slideway (9) when the latter is at the end of its travel driven by the roller (5) and closes the orifice (8) of the section.
